(19) Europäisches Patentamt / European Patent Office / Office européen des brevets

(11) **EP 2 720 290 A1**

(12) **EUROPEAN PATENT APPLICATION**
published in accordance with Art. 153(4) EPC

(43) Date of publication:
**16.04.2014 Bulletin 2014/16**

(51) Int Cl.:
*H01M 2/16* $^{(2006.01)}$     *B29C 39/02* $^{(2006.01)}$
*B29C 41/12* $^{(2006.01)}$     *C08G 59/32* $^{(2006.01)}$
*C08J 9/26* $^{(2006.01)}$     *C08L 63/00* $^{(2006.01)}$

(21) Application number: **12800421.5**

(22) Date of filing: **12.06.2012**

(86) International application number:
**PCT/JP2012/003837**

(87) International publication number:
**WO 2012/172789 (20.12.2012 Gazette 2012/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2011 JP 2011131523**
              **29.05.2012 JP 2012122347**

(71) Applicant: **Nitto Denko Corporation**
**Osaka 567-8680 (JP)**

(72) Inventors:
• **YANO, Chiharu**
**Ibaraki-shi**
**Osaka 567-8680 (JP)**

• **SAKAMOTO, Michie**
**Ibaraki-shi**
**Osaka 567-8680 (JP)**
• **TAKE, Hiroyoshi**
**Ibaraki-shi**
**Osaka 567-8680 (JP)**
• **YAMADA, Yosuke**
**Ibaraki-shi**
**Osaka 567-8680 (JP)**
• **NOUMI, Shunsuke**
**Ibaraki-shi**
**Osaka 567-8680 (JP)**

(74) Representative: **Hart-Davis, Jason et al**
**Cabinet Beau de Loménie**
**158, rue de l'Université**
**75340 Paris Cedex 07 (FR)**

(54) **SEPARATOR FOR NONAQUEOUS ELECTROLYTE ELECTRICITY STORAGE DEVICES, NONAQUEOUS ELECTROLYTE ELECTRICITY STORAGE DEVICE, METHOD FOR PRODUCING SEPARATOR FOR NONAQUEOUS ELECTROLYTE ELECTRICITY STORAGE DEVICES, AND METHOD FOR MANUFACTURING NONAQUEOUS ELECTROLYTE ELECTRICITY STORAGE DEVICE**

(57) The present invention provides a method for producing a separator for nonaqueous electrolyte electricity storage devices. The method allows: avoidance of use of a solvent that places a large load on the environment; relatively easy control of parameters such as the porosity and the pore diameter; and a high electrochemical stability of a resultant separator for nonaqueous electrolyte electricity storage devices. The present invention relates to a method for producing a separator for nonaqueous electrolyte electricity storage devices that has a thickness ranging from 5 to 50 μm. The method of the present invention includes the steps of: preparing an epoxy resin composition containing an epoxy resin whose molecular structure has no aromatic ring, a curing agent, and a porogen; forming a cured product of the epoxy resin composition into a sheet shape or curing a sheet-shaped formed body of the epoxy resin composition, so as to obtain an epoxy resin sheet; and removing the porogen from the epoxy resin sheet by means of a halogen-free solvent.

FIG. 2

EP 2 720 290 A1

**Description**

TECHNICAL FIELD

The present invention relates to a separator for nonaqueous electrolyte electricity storage devices, a nonaqueous electrolyte electricity storage device, and methods for producing them. The present invention particularly relates to a separator using an epoxy resin.

BACKGROUND ART

The demand for nonaqueous electrolyte electricity storage devices, as typified by lithium-ion secondary batteries, lithium-ion capacitors etc., is increasing year by year against a background of various problems such as global environment conservation and depletion of fossil fuel. Porous polyolefin membranes are conventionally used as separators for nonaqueous electrolyte electricity storage devices. A porous polyolefin membrane can be produced by the method described below.

First, a solvent and a polyolefin resin are mixed and heated to prepare a polyolefin solution. The polyolefin solution is formed into a sheet shape by means of a metal mold such as a T-die, and the resultant product is discharged and cooled to obtain a sheet-shaped formed body. The sheet-shaped formed body is stretched, and the solvent is removed from the formed body. A porous polyolefin membrane is thus obtained. In the step of removing the solvent from the formed body, an organic solvent is used (see Patent Literature 1).

In the above production method, a halogenated organic compound such as dichloromethane is often used as the organic solvent. The use of a halogenated organic compound places a very large load on the environment, and thus has become a problem.

By contrast, with a method described in Patent Literature 2 (a so-called dry method), a porous polyolefin membrane can be produced without use of a solvent that places a large load on the environment. However, this method has a problem in that control of the pore diameter of the porous membrane is difficult. In addition, there is also a problem in that when a porous membrane produced by this method is used as a separator, imbalance of ion permeation is likely to occur inside an electricity storage device.

Furthermore, a separator for electricity storage devices is placed in an environment where a contact potential difference is generated between the separator and an electrolyte solution. This environment is likely to cause electrochemical deterioration of the separator. Therefore, it is desired that a separator should exhibit a high electrochemical stability under the above environment.

CITATION LIST

Patent Literature

Patent Literature 1: JP 2001-192487 A
Patent Literature 2: JP 2000-30683 A

SUMMARY OF INVENTION

Technical Problem

The present invention aims to provide a method for producing a separator for nonaqueous electrolyte electricity storage devices. The method allows: avoidance of use of a solvent that places a large load on the environment; relatively easy control of parameters such as the porosity and the pore diameter; and high electrochemical stability of a resultant separator for nonaqueous electrolyte electricity storage devices.

Solution to Problem

That is, the present invention provides a method for producing a separator for nonaqueous electrolyte electricity storage devices that has a thickness ranging from 5 to 50 $\mu$m, the method including the steps of: preparing an epoxy resin composition containing an epoxy resin whose molecular structure has no aromatic ring, a curing agent, and a porogen; forming a cured product of the epoxy resin composition into a sheet shape or curing a sheet-shaped formed body of the epoxy resin composition, so as to obtain an epoxy resin sheet; and removing the porogen from the epoxy resin sheet by means of a halogen-free solvent.

In another aspect, the present invention provides a method for producing a nonaqueous electrolyte electricity storage device, the method including the steps of: preparing a cathode, an anode, and a separator; and assembling an electrode group from the cathode, the anode, and the separator. The separator has a thickness ranging from 5 to 50 μm, and the step of preparing the separator includes the steps of: (i) preparing an epoxy resin composition containing an epoxy resin whose molecular structure has no aromatic ring, a curing agent, and a porogen; (ii) forming a cured product of the epoxy resin composition into a sheet shape or curing a sheet-shaped formed body of the epoxy resin composition, so as to obtain an epoxy resin sheet; and (iii) removing the porogen from the epoxy resin sheet by means of a halogen-free solvent.

In still another aspect, the present invention provides a separator for nonaqueous electrolyte electricity storage devices, the separator including: a three-dimensional network structure composed of an epoxy resin whose molecular structure has no aromatic ring; and pores communicating with each other so that ions can move between a front surface and a back surface of the separator. The separator has a thickness ranging from 5 to 50 μm.

In still another aspect, the present invention provides a nonaqueous electrolyte electricity storage device including: a cathode; an anode; the separator of the present invention disposed between the cathode and the anode; and an electrolyte having ion conductivity.

Advantageous Effects of Invention

According to the present invention, a porogen is removed from an epoxy resin sheet by means of a halogen-free solvent, and thus a porous epoxy resin membrane is obtained. Therefore, the use of a solvent that places a large load on the environment can be avoided. In addition, according to the present invention, parameters such as the porosity and the pore diameter can be controlled relatively easily by adjusting the content and type of the porogen. Furthermore, according to the present invention, it is possible to provide a separator for nonaqueous electrolyte electricity storage devices that has higher electrochemical stability than separators using other types of epoxy resins.

BRIEF DESCRIPTION OF DRAWINGS

FIG. 1 is a schematic cross-sectional view of a nonaqueous electrolyte electricity storage device according to one embodiment of the present invention.
FIG. 2 is a schematic diagram showing a cutting step.

DESCRIPTION OF EMBODIMENT

Hereinafter, one embodiment of the present invention will be described with reference to the accompanying drawings.

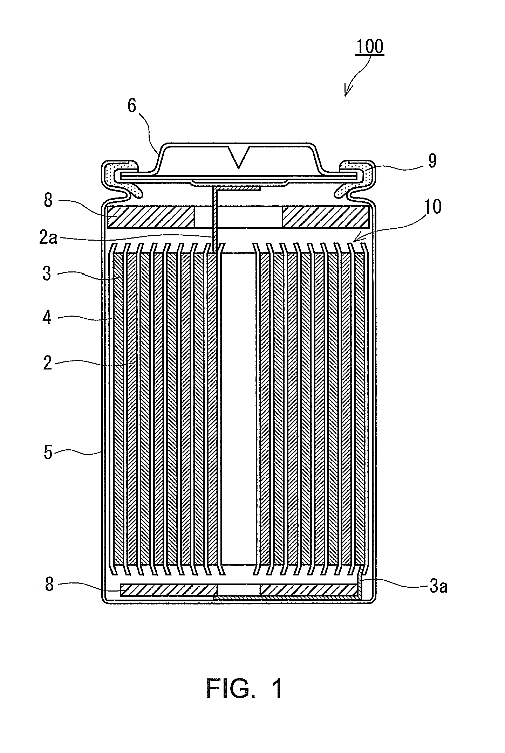

As shown in FIG. 1, a nonaqueous electrolyte electricity storage device 100 according to the present embodiment includes a cathode 2, an anode 3, a separator 4, and a case 5. The separator 4 is disposed between the cathode 2 and the anode 3. The cathode 2, the anode 3, and the separator 4 are wound together to form an electrode group 10 as an electricity generating element. The electrode group 10 is contained in the case 5 having a bottom. The electricity storage device 100 is typically a lithium-ion secondary battery.

In the present embodiment, the case 5 has a hollow-cylindrical shape. That is, the electricity storage device 100 has a hollow-cylindrical shape. However, the shape of the electricity storage device 100 is not particularly limited. For example, the electricity storage device 100 may have a flat rectangular shape. In addition, the electrode group 10 need not have a wound structure. A plate-shaped electrode group may be formed by simply stacking the cathode 2, the separator 4, and the anode 3. The case 5 is made of a metal such as stainless steel or aluminum. Furthermore, the electrode group 10 may be contained in a case made of a material having flexibility. The material having flexibility is composed of, for example, an aluminum foil and resin films attached to both surfaces of the aluminum foil.

The electricity storage device 100 further includes a cathode lead 2a, an anode lead 3a, a cover 6, a packing 9, and two insulating plates 8. The cover 6 is fixed at an opening of the case 5 via the packing 9. The two insulating plates 8 are disposed above and below the electrode group 10, respectively. The cathode lead 2a has one end connected electrically to the cathode 2 and the other end connected electrically to the cover 6. The anode lead 3a has one end connected electrically to the anode 3 and the other end connected electrically to the bottom of the case 5. The inside of the electricity storage device 100 is filled with a nonaqueous electrolyte (typically, a nonaqueous electrolyte solution) having ion conductivity. The nonaqueous electrolyte is impregnated into the electrode group 10. This makes it possible for ions (typically, lithium ions) to move between the cathode 2 and the anode 3 through the separator 4.

The cathode 2 can be composed of a cathode active material capable of absorbing and releasing lithium ions, a binder, and a current collector. For example, a cathode active material is mixed with a solution containing a binder to prepare a composite agent, the composite agent is applied to a cathode current collector and then dried, and thus the cathode 2 can be fabricated.

As the cathode active material, a commonly-known material used as a cathode active material for a lithium-ion secondary battery can be used. Specifically, a lithium-containing transition metal oxide, a lithium-containing transition metal phosphate, a chalcogen compound, or the like, can be used as the cathode active material. Examples of the lithium-containing transition metal oxide include $LiCoO_2$, $LiMnO_2$, $LiNiO_2$, and substituted compounds thereof in which part of the transition metal is substituted by another metal. Examples of the lithium-containing transition metal phosphate include LiFePO4, and a substituted compound of $LiFePO_4$ in which part of the transition metal (Fe) is substituted by another metal. Examples of the chalcogen compound include titanium disulfide and molybdenum disulfide.

A commonly-known resin can be used as the binder. Examples of resins which can be used as the binder include: fluorine-based resins such as polyvinylidene fluoride (PVDF), hexafluoropropylene, and polytetrafluoroethylene; hydrocarbon-based resins such as styrene-butadiene rubbers and ethylene-propylene terpolymer; and mixtures thereof. Conductive powder such as carbon black may be contained in the cathode 2 as a conductive additive.

A metal material excellent in oxidation resistance, for example, aluminum processed into the form of foil or mesh, can be suitably used as the cathode current collector.

The anode 3 can be composed of an anode active material capable of absorbing and releasing lithium ions, a binder, and a current collector. The anode 3 can also be fabricated by the same method as that for the cathode 2. The same binder as used for the cathode 2 can be used for the anode 3.

As the anode active material, a commonly-known material used as an anode active material for a lithium-ion secondary battery can be used. Specifically, a carbon-based active material, an alloy-based active material that can form an alloy with lithium, a lithium-titanium composite oxide (e.g., $Li_4Ti_5O_{12}$), or the like, can be used as the anode active material. Examples of the carbon-based active material include: calcined products of coke, pitch, phenolic resins, polyimides, cellulose etc.; artificial graphite; and natural graphite. Examples of the alloy-based active material include aluminum, tin, tin compounds, silicon, and silicon compounds.

A metal material excellent in reduction stability, for example, copper or a copper alloy processed into the form of foil or mesh, can be suitably used as the anode current collector. In the case where a high-potential anode active material such as a lithium-titanium composite oxide is used, aluminum processed into the form of foil or mesh can also be used as the anode current collector.

The nonaqueous electrolyte solution typically contains a nonaqueous solvent and an electrolyte. Specifically, an electrolyte solution obtained by dissolving a lithium salt (electrolyte) in a nonaqueous solvent can be suitably used. In addition, a gel electrolyte containing a nonaqueous electrolyte solution, a solid electrolyte obtained by dissolving and decomposing a lithium salt in a polymer such as polyethylene oxide, or the like, can also be used as the nonaqueous electrolyte. Examples of the lithium salt include lithium tetrafluoroborate ($LiBF_4$), lithium hexafluorophosphate ($LiPF_6$), lithium perchlorate ($LiClO_4$), and lithium trifluoromethanesulfonate ($LiCF_3SO_3$). Examples of the nonaqueous solvent include propylene carbonate (PC), ethylene carbonate (EC), methyl ethyl carbonate (MEC), 1,2-dimethoxyethane (DME), $\gamma$-butyrolactone ($\gamma$-BL), and mixtures thereof.

Next, the separator 4 will be described in detail.

In the present embodiment, the separator 4 is formed of a porous epoxy resin membrane having a three-dimensional network structure and pores. Adjacent pores may communicate with each other so that ions can move between the front surface and the back surface of the separator 4, i.e., so that ions can move between the cathode 2 and the anode 3. The separator 4 has a thickness in the range of, for example, 5 to 50 $\mu$m. If the separator 4 is too thick, it becomes difficult for ions to move between the cathode 2 and the anode 3. Although it is possible to produce the separator 4 having a thickness less than 5 $\mu$m, the thickness is preferably 5 $\mu$m or more, and particularly preferably 10 $\mu$m or more, in order to ensure reliability of the electricity storage device 100.

For example, the separator 4 has a porosity in the range of 20 to 80%, and an average pore diameter in the range of 0.02 to 1 $\mu$m. If the porosity and average pore diameter are adjusted in such ranges, the separator 4 can fulfill a required function sufficiently.

The porosity can be measured by the following method. First, an object to be measured is cut into predetermined dimensions (e.g., a circle having a diameter of 6 cm), and the volume and weight are obtained. The obtained results are substituted into the following expression to calculate the porosity.

$$\text{Porosity } (\%) = 100 \times (\text{V} - (\text{W/D}))/\text{V}$$

V: Volume ($cm^3$)

W: Weight (g)

D: Average density of components (g/cm$^3$)

The average pore diameter can be obtained by observing a cross-section of the separator 4 with a scanning electron microscope. Specifically, pore diameters are obtained through image processing of each of the pores present within a visual-field width of 60 $\mu$m and within a predetermined depth from the surface (e.g., 1/5 to 1/100 of the thickness of the separator 4), and the average value of the pore diameters can be obtained as the average pore diameter. The image processing can be executed by means of, for example, a free software "Image J" or "Photoshop" manufactured by Adobe Systems Incorporated.

In addition, the separator 4 may have an air permeability (Gurley value) in the range of, for example, 1 to 1000 seconds/100 cm$^3$, in particular, 10 to 1000 seconds/100 cm$^3$. If the separator 4 has an air permeability within such a range, ions can easily move between the cathode 2 and the anode 3. The air permeability can be measured according to the method specified in Japan Industrial Standards (JIS) P 8117.

Next, the method for producing the porous epoxy resin membrane used for the separator 4 will be described.

For example, the porous epoxy resin membrane can be produced by any of the following methods (a), (b), and (c). The methods (a) and (b) are the same in that an epoxy resin composition is formed into a sheet shape, and then a curing step is carried out. The method (c) is characterized in that a block-shaped cured product of an epoxy resin is made, and the cured product is formed into a sheet shape.

Method (a)

An epoxy resin composition containing an epoxy resin, a curing agent, and a porogen is applied onto a substrate so that a sheet-shaped formed body of the epoxy resin composition is obtained. Subsequently, the sheet-shaped formed body of the epoxy resin composition is heated to cause the epoxy resin to be three-dimensionally cross-linked. At this time, a bicontinuous structure is formed as a result of phase separation between the cross-linked epoxy resin and the porogen. Subsequently, the obtained epoxy resin sheet is washed to remove the porogen, and is then dried to obtain a porous epoxy resin membrane having a three-dimensional network structure and pores communicating with each other. The type of the substrate is not particularly limited. A plastic substrate, a glass substrate, a metal plate, or the like, can be used as the substrate.

Method (b)

An epoxy resin composition containing an epoxy resin, a curing agent, and a porogen is applied onto a substrate. Subsequently, another substrate is placed onto the applied epoxy resin composition to fabricate a sandwich-like structure. Spacers (e.g., double-faced tapes) may be provided at four corners of the substrate in order to keep a certain space between the substrates. Next, the sandwich-like structure is heated to cause the epoxy resin to be three-dimensionally cross-linked. At this time, a bicontinuous structure is formed as a result of phase separation between the cross-linked epoxy resin and the porogen. Subsequently, the obtained epoxy resin sheet is taken out, washed to remove the porogen, and then dried to obtain a porous epoxy resin membrane having a three-dimensional network structure and pores communicating with each other. The type of the substrate is not particularly limited. A plastic substrate, a glass substrate, a metal plate, or the like, can be used as the substrate. In particular, a glass substrate can be suitably used.

Method (c)

An epoxy resin composition containing an epoxy resin, a curing agent, and a porogen is filled into a metal mold having a predetermined shape. Subsequently, the epoxy resin is caused to be three-dimensionally cross-linked to fabricate a hollow-cylindrical or solid-cylindrical cured product of the epoxy resin composition. At this time, a bicontinuous structure is formed as a result of phase separation between the cross-linked epoxy resin and the porogen. Subsequently, the surface part of the cured product of the epoxy resin composition is cut with a predetermined thickness while rotating the cured product about the hollow cylinder axis or solid cylinder axis, to fabricate an epoxy resin sheet having a long strip shape. Then, the epoxy resin sheet is washed to remove the porogen contained in the sheet, and is then dried to obtain a porous epoxy resin membrane having a three-dimensional network structure and pores communicating with each other.

The method (c) will be described in detail. The step of preparing an epoxy resin composition, the step of curing an epoxy resin, the step of removing a porogen, and the like, are the same among all the methods. In addition, usable materials are also the same among all the methods.

With the method (c), a porous epoxy resin membrane can be produced through the following main steps.

(i) Preparing an epoxy resin composition
(ii) Forming a cured product of the epoxy resin composition into a sheet shape
(iii) Removing a porogen from the epoxy resin sheet

First, an epoxy resin composition containing an epoxy resin, a curing agent, and a porogen (micropore-forming agent) is prepared. Specifically, a uniform solution is prepared by dissolving an epoxy resin and a curing agent in a porogen.

In the present invention, the epoxy resin used is an epoxy resin whose molecular structure has no aromatic ring, i.e., a non-aromatic epoxy resin. Non-aromatic epoxy resins are less subject to electrochemical oxidation and have higher chemical stability than aromatic epoxy resins. Therefore, even if the epoxy resin remains unreacted in the porous epoxy resin membrane obtained by the present invention, the porous epoxy resin membrane exerts less influence on the characteristics of a nonaqueous electrolyte electricity storage device when used as a separator for the electricity storage device. Examples of non-aromatic epoxy resins include epoxy resins containing triglycidyl isocyanurate, aliphatic glycidyl ether-type epoxy resins, aliphatic glycidyl ester-type epoxy resins, cycloaliphatic glycidyl ether-type epoxy resins, cycloaliphatic glycidylamine-type epoxy resins, and cycloaliphatic glycidyl ester-type epoxy resins. These may be used singly, or two or more thereof may be used in combination.

Among these, at least one that is selected from the group consisting of epoxy resins containing triglycidyl isocyanurate, cycloaliphatic glycidyl ether-type epoxy resins, cycloaliphatic glycidylamine-type epoxy resins, and cycloaliphatic glycidyl ester-type epoxy resins, and that has an epoxy equivalent of 6000 or less and a melting point of 170°C or lower, can be suitably used. The use of these epoxy resins allows formation of a uniform three-dimensional network structure and uniform pores, and also allows excellent chemical resistance and high strength to be imparted to the porous epoxy resin membrane.

As the curing agent, either an aromatic curing agent or a non- aromatic curing agent can be used. Examples of the aromatic curing agent include aromatic amines (e.g., meta-phenylenediamine, diaminodiphenylmethane, diaminodiphenyl sulfone, benzyldimethylamine, and dimethylaminomethylbenzene), aromatic acid anhydrides (e.g., phthalic anhydride, trimellitic anhydride, and pyromellitic anhydride), phenolic resins, phenolic novolac resins, and amines containing a heteroaromatic ring (e.g., amines containing a triazine ring). Examples of the non-aromatic curing agent include aliphatic amines (e.g., ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyetherdiamine), cycloaliphatic amines (e.g., isophoronediamine, menthanediamine, N-aminoethylpiperazine, an adduct of 3,9-bis(3-aminopropyl)2,4,8,10-tetraoxaspiro(5, 5)undecane, bis(4-amino-3-methylcyclohexyl)methane, bis(4-aminocyclohexyl)methane, and modified products thereof), and aliphatic polyamidoamines containing polyamines and dimer acids. These may be used singly, or two or more thereof may be used in combination.

Among these, a curing agent having two or more primary amines per molecule can be suitably used. Specifically, at least one selected from the group consisting of meta-phenylenediamine, diaminodiphenylmethane, diaminodiphenyl sulfone, polymethylenediamine, bis(4-amino-3-methylcyclohexyl)methane, and bis(4-aminocyclohexyl)methane, can be suitably used. The use of these curing agents allows formation of a uniform three-dimensional network structure and uniform pores, and also allows high strength and appropriate elasticity to be imparted to the porous epoxy resin membrane.

In addition, a non-aromatic curing agent is preferably used. This is because non-aromatic curing agents are less subject to electrochemical oxidation and have higher chemical stability than aromatic curing agents. Accordingly, even if the curing agent remains unreacted in the porous epoxy resin sheet obtained, the porous epoxy resin membrane exerts less influence on the characteristics of a nonaqueous electrolyte electricity storage device when used as a separator for the electricity storage device.

The porogen can be a solvent capable of dissolving the epoxy resin and the curing agent. The porogen is also used as a solvent that can cause reaction-induced phase separation after the epoxy resin and the curing agent are polymerized. Specific examples of substances which can be used as the porogen include cellosolves such as methyl cellosolve and ethyl cellosolve, esters such as ethylene glycol monomethyl ether acetate and propylene glycol monomethyl ether acetate, glycols such as polyethylene glycol and polypropylene glycol, and ethers such as polyoxyethylene monomethyl ether and polyoxyethylene dimethyl ether. These may be used singly, or two or more thereof may be used in combination.

Among these, at least one selected from the group consisting of methyl cellosolve, ethyl cellosolve, polyethylene glycol having a molecular weight of 600 or less, ethylene glycol monomethyl ether acetate, propylene glycol monomethyl ether acetate, polypropylene glycol, polyoxyethylene monomethyl ether, and polyoxyethylene dimethyl ether, can be suitably used. In particular, at least one selected from the group consisting of polyethylene glycol having a molecular weight of 200 or less, polypropylene glycol having a molecular weight of 500 or less, polyoxyethylene monomethyl ether, and propylene glycol monomethyl ether acetate, can be suitably used. The use of these porogens allows formation of a uniform three-dimensional network structure and uniform pores. These may be used singly, or two or more thereof may be used in combination.

In addition, a solvent in which a reaction product of the epoxy resin and the curing agent is soluble can be used as the porogen even if the epoxy resin or the curing agent is individually insoluble or poorly-soluble in the solvent at normal temperature. Examples of such a porogen include a brominated bisphenol A-type epoxy resin ("Epicoat 5058" manufactured by Japan Epoxy Resin Co., Ltd).

The porosity, the average pore diameter, and the pore diameter distribution of the porous epoxy resin membrane vary depending on the types of the materials, the blending ratio of the materials, and reaction conditions (e.g., heating temperature and heating time at the time of reaction-induced phase separation). Accordingly, in order to obtain the intended porosity, average pore diameter, and pore diameter distribution, optimal conditions are preferably selected. In addition, by control of the molecular weight of the cross-linked epoxy resin, the molecular weight distribution, the viscosity of the solution, the cross-linking reaction rate etc. at the time of phase separation, a bicontinuous structure of the cross-linked epoxy resin and the porogen can be fixed in a particular state, and thus a stable porous structure can be obtained.

For example, the blending ratio of the curing agent to the epoxy resin is such that the curing agent equivalent is 0.6 to 1.5 per one epoxy group equivalent. An appropriate curing agent equivalent contributes to improvement in the characteristics of the porous epoxy resin membrane, such as the heat resistance, the chemical durability, and the mechanical characteristics.

In order to obtain an intended porous structure, a curing accelerator may be added to the solution in addition to the curing agent. Examples of the curing accelerator include tertiary amines such as triethylamine and tributylamine, and imidazoles such as 2-phenol-4-methylimidazole, 2-ethyl-4-methylimidazole, and 2-phenol-4,5-dihydroxyimidazole.

For example, 40 to 80% by weight of the porogen can be used relative to the total weight of the epoxy resin, the curing agent, and the porogen. The use of an appropriate amount of the porogen allows formation of a porous epoxy resin membrane having the desired porosity, average pore diameter, and air permeability.

One example of the method for adjusting the average pore diameter of the porous epoxy resin membrane within a desired range is to mix and use two or more types of epoxy resins having different epoxy equivalents. At this time, the difference between the epoxy equivalents is preferably 100 or more, and an epoxy resin which is liquid at normal temperature and an epoxy resin which is solid at normal temperature are mixed and used in some cases.

Next, a cured product of the epoxy resin composition is fabricated from the solution containing the epoxy resin, the curing agent, and the porogen. Specifically, the solution is filled into a metal mold, and heated as necessary. A cured product having a predetermined shape can be obtained by causing the epoxy resin to be three-dimensionally cross-linked. At this time, a bicontinuous structure is formed as a result of phase separation between the cross-linked epoxy resin and the porogen.

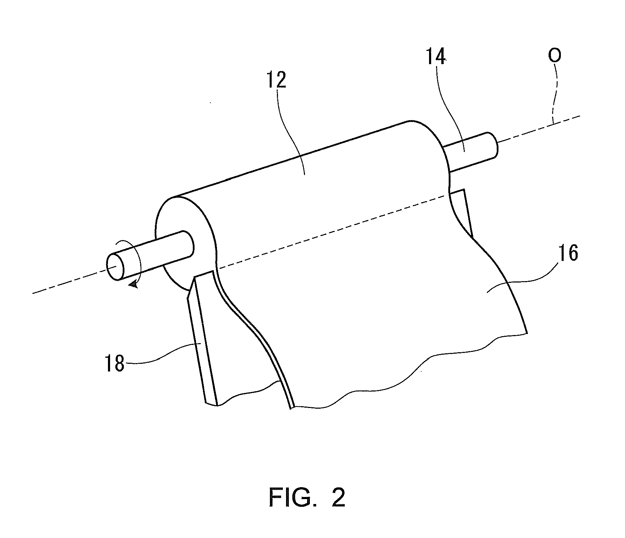

The shape of the cured product is not particularly limited. If a solid-cylindrical or hollow-cylindrical metal mold is used, a cured product having a hollow-cylindrical or solid-cylindrical shape can be obtained. In the case of a cured product having a hollow-cylindrical or solid-cylindrical shape, the cutting step described later (see FIG. 2) is easy to carry out.

The temperature and time required for curing the epoxy resin composition vary depending on the types of the epoxy resin and the curing agent, and thus are not particularly limited. In order to obtain a porous epoxy resin membrane having pores which are distributed uniformly and have uniform pore diameters, the curing process can be carried out at a room temperature. In the case of curing at a room temperature, the temperature is about 20 to 40°C, and the time is about 3 to 100 hours, and preferably about 20 to 50 hours. In the case of curing by heating, the temperature is about 40 to 120°C, and preferably about 60 to 100°C, and the time is about 10 to 300 minutes, and preferably about 30 to 180 minutes. After the curing process, postcuring (post-treatment) may be performed in order to increase the degree of cross-linking of the cross-linked epoxy resin. The conditions for the postcuring are not particularly limited. The temperature is a room temperature, or about 50 to 160°C, and the time is about 2 to 48 hours.

The dimensions of the cured product are not particularly limited. In the case where the cured product has a hollow-cylindrical or solid-cylindrical shape, the diameter of the cured product is, for example, 20 cm or more, and preferably 30 to 150 cm, from the standpoint of production efficiency of the porous epoxy resin membrane. The length (in the axial direction) of the cured product can also be set as appropriate taking into account the dimensions of the porous epoxy resin membrane to be obtained. The length of the cured product is, for example, 20 to 200 cm. From the standpoint of handleability, the length is preferably 20 to 150 cm, and more preferably 20 to 120 cm.

Next, the cured product is formed into a sheet shape. The cured product having a hollow-cylindrical or solid-cylindrical shape can be formed into a sheet shape by the following method. Specifically, a cured product 12 is mounted on a shaft 14 as shown in FIG. 2. The surface part of the cured product 12 is cut (sliced) with a predetermined thickness by means of a cutting blade 18 (slicer) so that an epoxy resin sheet 16 having a long strip shape is obtained. More specifically, the surface part of the cured product 12 is skived while the cured product 12 is being rotated about a hollow cylinder axis O (or solid cylinder axis) of the cured product 12 relative to the cutting blade 18. With this method, the epoxy resin sheet 16 can be efficiently fabricated.

The line speed during cutting of the cured product 12 is in the range of, for example, 2 to 70 m/min. The thickness of the epoxy resin sheet 16 is determined depending on the intended thickness (5 to 50 $\mu$m) of the porous epoxy resin membrane. Removal of the porogen and the subsequent drying slightly reduce the thickness. Therefore, the epoxy resin sheet 16 generally has a thickness slightly greater than the intended thickness of the porous epoxy resin membrane. The length of the epoxy resin sheet 16 is not particularly limited. From the standpoint of the production efficiency of the epoxy resin sheet 16, the length is, for example, 100 m or more, and preferably 1000 m or more.

Finally, the porogen is extracted and removed from the epoxy resin sheet 16. Specifically, the porogen can be removed from the epoxy resin sheet 16 by immersing the epoxy resin sheet 16 in a halogen-free solvent. Thus, the porous epoxy resin membrane which is usable as the separator 4 can be obtained.

As the halogen-free solvent for removing the porogen from the epoxy resin sheet 16, at least one selected from the group consisting of water, DMF (N,N-dimethylformamide), DMSO (dimethylsulfoxide), and THF (tetrahydrofuran), can be used depending on the type of the porogen. In addition, a supercritical fluid of water, carbon dioxide, or the like, can also be used as the solvent for removing the porogen. In order to actively remove the porogen from the epoxy resin sheet 16, ultrasonic washing may be performed, or the solvent may be heated and then used.

The type of a washing device for removing the porogen is not particularly limited either, and a commonly-known washing device can be used. In the case where the porogen is removed by immersing the epoxy resin sheet 16 in the solvent, a multi-stage washer having a plurality of washing tanks can be suitably used. The number of stages of washing is more preferably three or more. In addition, washing by means of counterflow which substantially corresponds to multi-stage washing may be performed. Furthermore, the temperature or the type of the solvent may be changed for each stage of washing.

After removal of the porogen, the porous epoxy resin membrane is subjected to a drying process. The conditions for drying are not particularly limited. The temperature is generally about 40 to 120°C, and preferably about 50 to 100°C. The drying time is about 10 seconds to 5 minutes. For the drying process, a dryer can be used that employs a commonly-known sheet drying method, such as a tenter method, a floating method, a roll method, or a belt method. A plurality of drying methods may be combined.

With the method of the present embodiment, the porous epoxy resin membrane which is usable as the separator 4 can be produced very easily. Since some step such as a stretching step required for production of conventional porous polyolefin membranes can be omitted, the porous epoxy resin membrane can be produced with high productivity. In addition, since a conventional porous polyolefin membrane is subjected to high temperature and high shear force during the production process, an additive such as an antioxidant needs to be used. By contrast, with the method of the present embodiment, the porous epoxy resin membrane can be produced without being subjected to high temperature and high shear force. Therefore, the need for use of an additive such as an antioxidant as contained in a conventional porous polyolefin membrane can be eliminated. Furthermore, since low-cost materials can be used as the epoxy resin, the curing agent, and the porogen, the production cost of the separator 4 can be reduced.

The separator 4 may consist only of the porous epoxy resin membrane, or may be composed of a stack of the porous epoxy resin membrane and another porous material. Examples of the other porous material include porous polyolefin membranes such as porous polyethylene membranes and porous polypropylene membranes, porous cellulose membranes, and porous fluorine resin membranes. The other porous material may be provided on only one surface or both surfaces of the porous epoxy resin membrane.

Also, the separator 4 may be composed of a stack of the porous epoxy resin membrane and a reinforcing member. Examples of the reinforcing member include woven fabrics and non-woven fabrics. The reinforcing member may be provided on only one surface or both surfaces of the porous epoxy resin membrane.

Examples

Hereinafter, the present invention will be described in detail using examples. However, the present invention is not limited to the examples.

[Example 1]

A polypropylene glycol solution of an epoxy resin was prepared by mixing 70 parts by weight of a cycloaliphatic glycidyl ether-type epoxy resin (EP4080E manufactured by Adeka Corporation) with 120 parts by weight of polypropylene glycol (SANNIX PP-400 manufactured by Sanyo Chemical Industries, Ltd.).

A mold release agent (QZ-13 manufactured by Nagase ChemteX Corporation) was applied thinly to the inner surface of a hollow-cylindrical metal mold (made of stainless steel and having an inner diameter of 20 cm and a height of 30 cm), and the metal mold was dried in a dryer set at 40 to 100°C. The polypropylene glycol solution of the epoxy resin was filled into the metal mold, and 21 parts by weight of bis(4-aminocyclohexyl)methane was added. An epoxy resin composition containing an epoxy resin, a curing agent, and a porogen was thus prepared.

Next, the epoxy resin composition was stirred with an anchor blade at 300 rpm for 30 minutes. Subsequently, vacuum defoaming was carried out using a vacuum desiccator (VZ-type manufactured by AS ONE Corporation) at about 0.1 MPa until foams were vanished. After the epoxy resin composition was left for about 2 hours, the epoxy resin composition was stirred again for about 30 minutes, and was defoamed again under vacuum. Next, the epoxy resin composition was left at 40°C for 48 hours to cure the epoxy resin composition. Then, secondary curing was performed for 24 hours with a hot air circulating dryer set at 60°C. A cured product of the epoxy resin composition was thus obtained.

Next, the surface part of the cured product was continuously sliced with a thickness of 30 μm using a cutting lathe (manufactured by Toshiba Machine Co., Ltd) according to the method described with reference to FIG. 2, and thus an epoxy resin sheet was obtained. Polypropylene glycol was removed by washing the epoxy resin sheet with a 50 volume% DMF aqueous solution and subsequently with pure water. Thereafter, the epoxy resin sheet was dried at 70°C for 2 minutes, at 80°C for 1 minute, and then at 90°C for 1 minute, to obtain a porous epoxy resin membrane of Example 1. The thickness of the porous epoxy resin membrane of Example 1 was about 27 μm.

[Comparative Example 1]

A polyethylene glycol solution of an epoxy resin was prepared by mixing 100 parts by weight of a bisphenol A-type epoxy resin (jER (registered trademark) 828 manufactured by Mitsubishi Chemical Corporation) with 197 parts by weight of polyethylene glycol (PEG 200 manufactured by Sanyo Chemical Industries, Ltd.).

A mold release agent (QZ-13 manufactured by Nagase ChemteX Corporation) was applied thinly to the inner surface of a hollow-cylindrical metal mold (made of stainless steel and having an inner diameter of 20 cm and a height of 30 cm), and the metal mold was dried in a dryer set at 40 to 100°C. The polyethylene glycol solution of the epoxy resin was filled into the metal mold, and 22 parts by weight of bis(4-aminocyclohexyl)methane was added. An epoxy resin composition containing an epoxy resin, a curing agent, and a porogen was thus prepared.

Next, the epoxy resin composition was stirred with an anchor blade at 300 rpm for 30 minutes. Subsequently, vacuum defoaming was carried out using a vacuum desiccator (VZ-type manufactured by AS ONE Corporation) at about 0.1 MPa until foams were vanished. After the epoxy resin composition was left for about 2 hours, the epoxy resin composition was stirred again for about 30 minutes, and was defoamed again under vacuum. Next, the epoxy resin composition was left at 25°C for 6 days to cure the epoxy resin composition. A cured product of the epoxy resin composition was thus obtained.

Next, the surface part of the cured product was continuously sliced with a thickness of 30 μm using a cutting lathe (manufactured by Toshiba Machine Co., Ltd) according to the method described with reference to FIG. 2, and thus an epoxy resin sheet was obtained. Polyethylene glycol was removed by washing the epoxy resin sheet with a 50 volume% DMF aqueous solution and subsequently with pure water. Thereafter, the epoxy resin sheet was dried at 70°C for 2 minutes, at 80°C for 1 minute, and then at 90°C for 1 minute, to obtain a porous epoxy resin membrane. The thickness of the porous epoxy resin membrane of Comparative Example 1 was about 26 μm.

[Reference Example 1]

A porous polypropylene membrane (Celgard 2400 manufactured by Celgard, LLC. and having a thickness of 25 μm) was prepared as a porous membrane of Reference Example 1.

[Reference Example 2]

A porous polypropylene membrane (Celgard 2400 manufactured by Celgard, LLC. and having a thickness of 25 μm) was prepared as a porous membrane of Reference Example 2.

(1) Porosity

The porosities of the porous membranes of Example, Comparative Example, and Reference Examples were calculated according to the method described in the above embodiment. In order to calculate the porosity of each of Example and Comparative Example, each of the two types of epoxy resins and the amine (curing agent) used for fabricating the porous membrane were used to fabricate a non-porous body of the epoxy resin. The specific gravity of the non-porous body was used as an average density D. The results are shown in Table 1.

(2) Air permeability

The air permeabilities (Gurley values) of the porous membranes of Example, Comparative Example, and Reference Examples were measured according to the method specified in Japan Industrial Standards (JIS) P 8117. The results are shown in Table 1.

9

(3) Electrochemical measurement

The porous epoxy resin membrane of each of Example 1 and Comparative Example 1 was cut into small pieces. The small pieces were weighed so that the weight of the small pieces was 0.04 g/ml relative to the volume of an electrolyte solution (prepared by dissolving $LiPF_6$ at a concentration of 1.4 mol/liter in a solvent containing ethylene carbonate and diethyl carbonate at a volume ratio of 1:2), and the small pieces and the solution were mixed in a screw cap sampling bottle. The screw cap sampling bottle was closed, and stored at a room temperature for 6 days in a glove box with a dew point of -50°C or lower. After the storage, a supernatant liquid was taken from the screw cap sampling bottle, and placed into a beaker cell. Li foils were immersed in the liquid as a reference electrode and a counter electrode, and a Pt electrode was immersed in the liquid as a working electrode. Using an electrochemical measurement system (Modulab manufactured by Solartron), sweeping was carried out from an open-circuit potential (OCP) to 6 V at a sweeping rate of 20 mV/sec. The reaction initiation voltage was estimated from the change in current value. The results are shown in Table 1.

[Fabrication of lithium secondary battery]

Next, a lithium-ion secondary battery of Example 1 was fabricated using the porous epoxy resin membrane of Example 1 as a separator according to the method described below.

Mixed were 89 parts by weight of lithium cobalt oxide (Cellseed C-10 manufactured by Nippon Chemical Industrial Co., Ltd.), 10 parts by weight of acetylene black (Denka Black manufactured by Denki Kagaku Kogyo K.K.), and 5 parts by weight of PVDF (KF Polymer L#1120 manufactured by Kureha Chemical Industries Co., Ltd.). N-methyl-2-pyrrolidone was then added so that the solid content concentration became 15% by weight, and thereby a slurry for a cathode was obtained. Onto an aluminum foil (current collector) having a thickness of 20 μm, the slurry was applied with a thickness of 200 μm. The coating was dried under vacuum at 80°C for 1 hour and at 120°C for 2 hours, and then was compressed by roll pressing. A cathode having a cathode active material layer with a thickness of 100 μm was thus obtained.

Mixed were 80 parts by weight of mesocarbon microbead (MCMB6-28 manufactured by Osaka Gas Chemicals Co., Ltd.), 10 parts by weight of acetylene black (Denka Black manufactured by Denki Kagaku Kogyo K.K.), and 10 parts by weight of PVDF (KF Polymer L#1120 manufactured by Kureha Chemical Industries Co., Ltd.). N-methyl-2-pyrrolidone was then added so that the solid content concentration became 15% by weight, and thereby a slurry for an anode was obtained. Onto a copper foil (current collector) having a thickness of 20 μm, the slurry was applied with a thickness of 200 μm. The coating was dried under vacuum at 80°C for 1 hour and at 120°C for 2 hours, and then was compressed by roll pressing. An anode having an anode active material layer with a thickness of 100 μm was thus obtained.

Next, an electrode group was assembled from the cathode, the anode, and the separator. Specifically, the electrode group was obtained by stacking the cathode, the porous epoxy resin membrane (separator) of Example 1, and the anode. The electrode group was placed in an aluminum-laminated package, and then an electrolyte solution was injected into the package. The electrolyte solution used was a solution prepared by dissolving $LiPF_6$ at a concentration of 1.4 mol/liter in a solvent that contains ethylene carbonate and diethyl carbonate at a volume ratio of 1:2, and then adding vinylene carbonate as an anode coating forming agent thereto so that the concentration of vinylene carbonate was 1% by weight. The package was finally sealed to obtain the lithium-ion secondary battery of Example 1.

Lithium-ion secondary batteries were fabricated using the porous membranes of Comparative Example 1 and Reference Example 2 in the same manner as in Example 1.

Furthermore, a lithium-ion secondary battery was fabricated using the porous membrane of Reference Example 1 in the same manner as in Example 1, except that the electrolyte solution used was a solution prepared by dissolving $LiPF_6$ at a concentration of 1.4 mol/liter in a solvent that contains ethylene carbonate and diethyl carbonate at a volume ratio of 1:2 (the solution contains no vinylene carbonate).

A 0.2 C charge/discharge test was carried out for each of the batteries of Example 1, Comparative Example 1, Reference Example 1, and Reference Example 2.

(4) 0.2C charge/discharge test

Each of the batteries of Example 1, Comparative Example 1, Reference Example 1, and Reference Example 2 was charged at a temperature of 25°C with a constant current corresponding to 0.2 C until the voltage reached 4.2 V, and after the voltage reached 4.2 V, the battery was charged with a constant voltage of 4.2 V until the current value decreased to 5% of a current value corresponding to 0.2 C. This charging was defined as one charging. Subsequently, the battery was discharged with a current value corresponding to 0.2 C until the voltage reached 2.75 V A discharged capacity in this first discharge was measured as an initial discharged capacity. The initial discharged capacity of the battery of Reference Example 1 (Celgard 2400, without anode coating forming agent) was used as a reference value of 100, and the initial discharged capacities of the other batteries were evaluated. The results are shown in Table 1.

[Table 1]

|  | Thickness (μm) | Porosity (%) | Air permeability (sec/100 cm$^3$) | Reaction initiation voltage (V) | Initial discharged capacity ratio |
|---|---|---|---|---|---|
| Example 1 | 27 | 44 | 534 | 4.5 | 103 |
| Com. Example 1 | 26 | 48 | 390 | 4.2 | 101 |
| Ref. Example 1 | 25 | 38 | 620 | - | 100 |
| Ref. Example 2 | 25 | 38 | 620 | - | 99 |

As shown in Table 1, the porous epoxy resin membrane of Example 1 had an appropriate porosity and air permeability. The voltage (reaction initiation voltage) at which a substance eluted from the porous epoxy resin membrane into the electrolyte solution initiates oxidation reaction, can be found by electrochemical measurement. The higher the voltage is, the less likely oxidation reaction is to occur. That is, a higher reaction initiation voltage indicates that a side reaction is less likely to be caused by a substance eluted into the electrolyte solution in the electricity storage device. In Example 1, the reaction initiation voltage is higher than that in Comparative Example 1, and therefore, a side reaction is less likely to occur. That is, the porous epoxy resin membrane of Example 1 can be said to be electrochemically stable. In addition, the lithium-ion secondary battery using the porous epoxy resin membrane of Example 1 exhibited a high initial discharged capacity. This is inferred to be due to the high electrochemical stability of the porous epoxy resin membrane of Example 1.

INDUSTRIAL APPLICABILITY

A separator provided by the present invention can be suitably used for nonaqueous electrolyte electricity storage devices such as lithium-ion secondary batteries, and can be suitably used in particular for high-capacity secondary batteries required for vehicles, motorcycles, ships, construction machines, industrial machines, residential electricity storage systems, etc.

**Claims**

1.   A method for producing a separator for nonaqueous electrolyte electricity storage devices that has a thickness ranging from 5 to 50 μm, the method comprising the steps of:

preparing an epoxy resin composition containing an epoxy resin whose molecular structure has no aromatic ring, a curing agent, and a porogen;
forming a cured product of the epoxy resin composition into a sheet shape or curing a sheet-shaped formed body of the epoxy resin composition, so as to obtain an epoxy resin sheet; and
removing the porogen from the epoxy resin sheet by means of a halogen-free solvent.

2.   The method for producing a separator for nonaqueous electrolyte electricity storage devices according to claim 1, wherein
the cured product has a hollow-cylindrical or solid-cylindrical shape, and
the step of forming the cured product into a sheet shape comprises the step of cutting a surface part of the cured product with a predetermined thickness so that the epoxy resin sheet obtained has a long strip shape.

3.   The method for producing a separator for nonaqueous electrolyte electricity storage devices according to claim 2, wherein the cutting step comprises cutting the surface part of the cured product while rotating the cured product about a hollow cylinder axis or a solid cylinder axis of the cured product relative to a cutting blade.

4. The method for producing a separator for nonaqueous electrolyte electricity storage devices according to claim 1, wherein the porogen contains at least one selected from polyethylene glycol and polypropylene glycol.

5. The method for producing a separator for nonaqueous electrolyte electricity storage devices according to claim 1, wherein the solvent contains at least one selected from the group consisting of water, dimethylformamide, dimethylsulfoxide, and tetrahydrofuran.

6. A method for producing a nonaqueous electrolyte electricity storage device, the method comprising the steps of:

preparing a cathode, an anode, and a separator; and
assembling an electrode group from the cathode, the anode, and the separator, wherein
the separator has a thickness ranging from 5 to 50 $\mu$m, and
the step of preparing the separator comprises the steps of:

(i) preparing an epoxy resin composition containing an epoxy resin whose molecular structure has no aromatic ring, a curing agent, and a porogen;
(ii) forming a cured product of the epoxy resin composition into a sheet shape or curing a sheet-shaped formed body of the epoxy resin composition, so as to obtain an epoxy resin sheet; and
(iii) removing the porogen from the epoxy resin sheet by means of a halogen-free solvent.

7. A separator for nonaqueous electrolyte electricity storage devices, comprising:

a three-dimensional network structure composed of an epoxy resin whose molecular structure has no aromatic ring; and
pores communicating with each other so that ions can move between a front surface and a back surface of the separator,
the separator having a thickness ranging from 5 to 50 $\mu$m.

8. A nonaqueous electrolyte electricity storage device comprising:

a cathode;
an anode;
the separator according to claim 7 disposed between the cathode and the anode; and
an electrolyte having ion conductivity.

FIG. 1

FIG. 2

| INTERNATIONAL SEARCH REPORT | International application No. |
|---|---|
| | PCT/JP2012/003837 |

| A. CLASSIFICATION OF SUBJECT MATTER |
|---|
| *H01M2/16*(2006.01)i, *B29C39/02*(2006.01)i, *B29C41/12*(2006.01)i, *C08G59/32* (2006.01)i, *C08J9/26*(2006.01)i, *C08L63/00*(2006.01)i |

According to International Patent Classification (IPC) or to both national classification and IPC

| B. FIELDS SEARCHED |
|---|
| Minimum documentation searched (classification system followed by classification symbols) |
| H01M2/16, B29C39/02, B29C41/12, C08G59/32, C08J9/26, C08L63/00 |

| Documentation searched other than minimum documentation to the extent that such documents are included in the fields searched |
|---|
| Jitsuyo Shinan Koho      1922-1996    Jitsuyo Shinan Toroku Koho    1996-2012 |
| Kokai Jitsuyo Shinan Koho   1971-2012    Toroku Jitsuyo Shinan Koho    1994-2012 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2010-077358 A  (Nitto Denko Corp.),<br>08 April 2010 (08.04.2010),<br>claims; paragraph [0030]; examples<br>(Family: none) | 1-8 |
| A | JP 2010-099654 A  (Nitto Denko Corp.),<br>06 May 2010 (06.05.2010),<br>claims; paragraph [0022]; examples<br>& EP 2361671 A1        & WO 2010/035807 A1<br>& CN 102099099 A | 1-8 |
| A | JP 2010-121122 A  (Nitto Denko Corp.),<br>03 June 2010 (03.06.2010),<br>claims; paragraphs [0026], [0043], [0044];<br>fig. 1<br>& WO 2010/047383 A1     & CN 102197073 A<br>& KR 10-2011-0079735 A | 1-8 |

| ☒   Further documents are listed in the continuation of Box C. | ☐   See patent family annex. |
|---|---|

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 11 September, 2012 (11.09.12) | 25 September, 2012 (25.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2">**INTERNATIONAL SEARCH REPORT**</td><td>International application No.<br>PCT/JP2012/003837</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2008-013672 A  (National University Corporation Kyoto Institute of Technology), 24 January 2008 (24.01.2008), claims; examples (Family: none) | 1-8 |
| A | JP 2007-035556 A  (Nitto Denko Corp.), 08 February 2007 (08.02.2007), claims (Family: none) | 1-8 |
| A | JP 2005-038793 A  (Matsushita Electric Industrial Co., Ltd.), 10 February 2005 (10.02.2005), claim 3; paragraph [0019] (Family: none) | 1-8 |
| A | JP 2002-324579 A  (Yuasa Corp.), 08 November 2002 (08.11.2002), claim 5; paragraphs [0001], [0040] (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001192487 A
- JP 2000030683 A